# EUROPEAN PATENT APPLICATION

(11) **EP 3 623 091 A1**
(43) Date of publication of application: **18.03.2020**
(21) Application number: 18194015.6
(22) Date of filing: 12.09.2018
(51) Int. Cl.: B23D 57/00

(54) **DIAMOND WIRE SAW WITH TWO WINDING DRUMS**

(71) Applicant: Well Diamond Wire Saws SA, 2400 Le Locle (CH)
(72) Inventor: Ebner, Daniel, 1054 Morrens (CH)
(74) Representative: P&TS SA (AG, Ltd.)

(57) **Abstract**

Wire saw comprising:
a wire (30) comprising a first end and a second end;
a first winding drum (10) with a first winding portion (11), wherein the first end is connected to the first drum (10) and the first end is wound up on the first winding portion (11), wherein the first drum (10) is rotatable around a first rotation axis (12);
a second winding winding drum (20) with a second winding portion (21), wherein the second end is connected to the second winding drum (20), and the second end is wound up on the second winding portion (21), wherein the second winding drum (20) is rotatable around a second rotation axis (22); and
a drive mechanism winding the wire (30) from the first winding portion (11) to the second winding portion (21) and vice versa.

## Description

### Field of the invention

The present invention concerns a wire saw, in particular a diamond wire saw.

### Description of related art

Diamond wire saws can cut any material with the highest precision. The diamond wire in the cutting region moves along its longitudinal axis. Any object can be cut by moving the object with respect to the diamond wire such that the (longitudinal axis of the) diamond wire moves through the object.

Diamond wire saws of the state of the art have a winding drum and an idler pulley. The diamond wire is wound on the winding drum, wherein one winding loop is guided around the idler pulley. The idler pulley and the winding drum rotate around parallel rotation axes. The winding drum is moved along its rotation axis during rotation such that the winding loop does not change its global position when moved from one side of the winding drum to the other. Thus, the diamond wire does not move except in the direction of the longitudinal axis of the diamond wire. A tension of the diamond wire is achieved by pulling the idler pulley away from the winding drum to maintain the diamond wire under tension. The size of the object to be cut is however limited by the diameter of the drum and/or the idler pulley, because of the second diamond wire of the loop running back to the winding drum. An alternative solution is to make the loop larger and to use several idler pulleys to increase the distance between the two diamond wires of the loop. Therefore, the diamond wire saws for big objects to cut require large drums and/or idler pulleys or many idler pulleys. In addition, they need long diamond wires.

### Brief summary of the invention

It is the object to improve the diamond saws of the state of the art and to solve the problems of the state of the art.

The object is solved by a diamond wire saw according to claim 1.

By using two winding drums and by winding the wire from one winding drum to the other winding drum, the necessity of having a second diamond wire coming back to the winding drum is not necessary any more. Therefore, it is suddenly possible to make very long cuts in large objects with very small and light diamond wire saws. This allows further to make very flexible cut lines and to cut forms.

The dependent claims refer to further advantageous embodiments.

### Brief Description of the Drawings

The invention will be better understood with the aid of the description of an embodiment given by way of example and illustrated by the figures, in which:
Fig. 1 shows an embodiment of the first winding drum, the second winding drum and the diamond wire of the diamond wire saw.
Fig. 2 to 5 show different winding states of a first embodiment of the diamond wire saw.
Fig. 6 to 9 show different winding states of a second embodiment of the diamond wire saw.

### Detailed Description of possible embodiments of the Invention

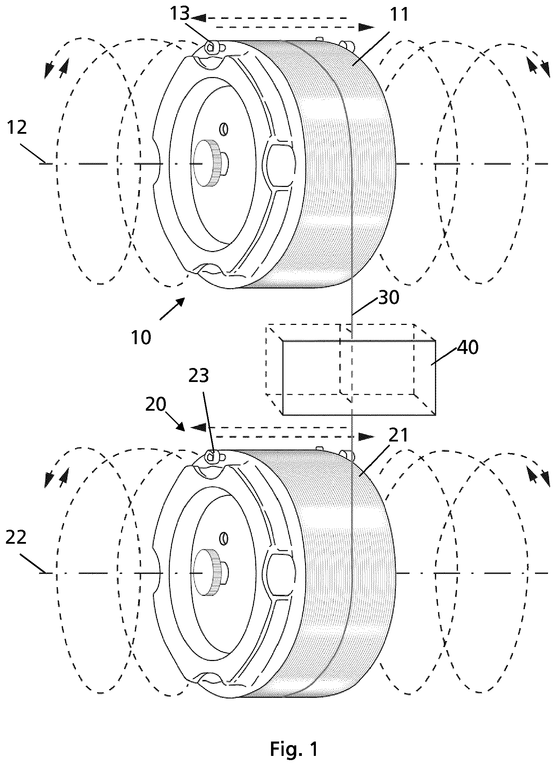

Fig. 1 shows the principle of a diamond wire saw according to the invention. The diamond wire saw comprises a first winding drum 10, a second winding drum 20, a diamond wire 30 and drive mechanism.

The diamond wire 30 is configured to cut a material. The diamond wire has a first end and a second end. The diamond wire 30 has a longitudinal axis. The longitudinal axis of the diamond wire 30 is the axis extending in the direction of the wire and/or extending along the wire (thus not necessarily in a direct line) from the first end to the second end of the wire 30. The diamond wire 30 has preferably a circular cross-section. However, other cross-sectional forms of the diamond wire 30 are possible. The diameter of the diamond wire 30 is preferably larger than 0.01 millimetre (mm), preferably larger than 0.005 mm. The diameter of the diamond wire 30 is preferably smaller than 5 mm, preferably smaller than 3 mm, preferably smaller than 2 mm. However, other diamond wire diameters are also possible. The diamond wire 30 is made preferably out of a base material with diamond particles. The base material is made preferably out of a metal, preferably a steel, preferably a stainless steel. However, the base material can be made out of different materials, e.g. by a resistant plastic. The diamond wire 30 comprise preferably diamond particles (diamond grains) incorporated in the wire. The diamond particles have different particle sizes incorporated. The particle size is preferably smaller than 200 micrometer, preferably smaller than 150 micrometer, preferably smaller than 100 micrometer, preferably smaller than 80 micrometer. The particle size is preferably larger than 0,1 micrometer, preferably larger than 0,5 micrometer, preferably larger than 1 micrometer, preferably larger than 5 micrometer. The length of the diamond wire 30 can vary arbitrarily. For example, the diamond wire 30 can be larger than 5 meters, preferably than 10 meters. For example, the diamond wire 30 can be smaller than 100 meters, preferably than 80 meters, preferably than 60 meters, preferably than 50 meters.

The first winding drum 10 can be rotated around a first rotation axis 12. The first winding drum 10 has preferably a form of a cylinder, preferably of a circular cylinder, preferably of a right cylinder, preferably of a right circular cylinder. The first winding drum 10 has two opposed lateral sides through which are intersected by the first rotation axis 12. Speaking in the form of the cylinder, the two opposed lateral sides correspond to the base surfaces of the cylinder (also called top and bottom surface of the cylinder). The first winding drum 10 has further a winding side. The winding side connects the two lateral sides. Speaking in the form of the cylinder, the winding side correspond to the curved side or the lateral side of the cylinder. The first winding drum 10, in particular its winding side comprises a first winding portion 11 for winding up the diamond wire 30 on the first winding drum 10 and/or for unwinding the diamond wire 30 from the first winding drum 10. The winding side and/or the first winding portion extends preferably around the first rotation axis 12 and/or has preferably a constant distance over the radial directions around the first rotation axis 12. The winding side and/or the first winding portion 11 is preferably parallel to the first rotation axis 12. The first winding portion 11 comprises preferably a guide recess extending helically around the first winding drum 10 such that the diamond wire 30 wound on the first winding drum 10 is supported in the guide recess. The helical axis of the guide recess corresponds preferably to the first rotation axis 12. The guide recess is preferably such that each winding of the diamond wire 30 wound on the first winding portion 11 has a well-defined position on the first winding drum 10. Due to the fine diamond wire 30, the helical recess and/or the first winding portion 11 corresponds to a (external or male) thread. Depending on the winding direction, the helical recess and/or the thread can be left-handed or right-handed. The distance between two neighbouring windings of the guide recess and/or of the thread is preferably larger than the diameter of the diamond wire. The distance between two neighbouring windings of the guide recess and/or of the thread is preferably smaller than 5 times, preferably than 4 times, preferably than 3 times, preferably than 2 times, preferably than 1,5 times the diameter of the diamond wire 30. Obviously, other guide means for supporting each winding of the diamond wire 30 wound on the first winding drum 10 in a well-defined position are possible. In general, the invention works with any other kind of first winding portion 11, e.g. a plane surface or a resilient surface. The guide recess and/or first end portion wound on the first winding portion 11 can comprise more than one full winding (360°), preferably more than two windings (720°), preferably more than three windings (1080°) or more windings around the first rotation axis 12. However, there are also embodiments which require less than one full winding around the first rotation axis 12 (see later). Different to an idler pulley, the length of the first end portion of the diamond wire 30 wound on the first winding portion 11 changes continuously, when the diamond wire 30, the first winding drum 10 and/or the second winding drum 20 is driven. This is due to the fact that the diamond wire 30 is wound from the first winding portion 11 to the second winding portion 21 or vice versa such that the length of the first end portion and of the second end portion continuously changes and thus the number of windings (also smaller than 1) changes continuously.

The second winding drum 20 can be rotated around a second rotation axis 22. The second winding drum 20 has preferably a form of a cylinder, preferably of a circular cylinder, preferably of a right cylinder, preferably of a right circular cylinder. The second winding drum 20 has two opposed lateral sides through which are intersected by the second rotation axis 22. Speaking in the form of the cylinder, the two opposed lateral sides correspond to the base surfaces of the cylinder (also called top and bottom surface of the cylinder). The second winding drum 20 has further a winding side. The winding side connects the two lateral sides. Speaking in the form of the cylinder, the winding side correspond to the curved side or the lateral side of the cylinder. The second winding drum 20, in particular its winding side comprises a second winding portion for winding up the diamond wire 30 on the second winding drum 20 and/or for unwinding the diamond wire 30 from the second winding drum 20. The winding side and/or the second winding portion extends preferably around the second rotation axis 22 and/or has preferably a constant distance over the radial directions around the second rotation axis 22. The winding side and/or the second winding portion 21 is preferably parallel to the second rotation axis 22. The second winding portion 21 comprises preferably a guide recess extending helically around the second winding drum 20 such that the diamond wire 30 wound on the second winding drum 20 is supported in the guide recess. The guide recess is preferably such that each winding of the diamond wire 30 wound on the second winding portion 21 has a well-defined position on the second winding drum 20. Due to the fine diamond wire 30, the helical recess and/or the second winding portion 21 corresponds preferably to a (external or male) thread. Depending on the winding direction, the helical recess and/or the thread can be left-handed or right-handed. The distance between two neighbouring windings of the guide recess and/or of the thread is preferably larger than the diameter of the diamond wire. The distance between two neighbouring windings of the guide recess and/or of the thread is preferably smaller than 5 times, preferably than 4 times, preferably than 3 time, preferably than2 time, preferably than 1,5 times the diameter of the diamond wire 30. Obviously, other guide means for supporting each winding of the diamond wire 30 wound on the second winding drum 20 in a well-defined position are possible. In general, the invention works with any kind of second winding portion 21, e.g. a plane surface or a resilient surface. The guide recess and/or second end portion wound on the second winding portion 21 can comprise more than one full winding (360°), preferably more than two windings (720°), preferably more than three windings (1080°) or more windings around the first rotation axis 12. However, there are also embodiments which require less than one full winding around the first rotation axis 12 (see later). Different to an idler pulley, the length of the first end portion of the diamond wire 30 wound on the second winding portion 11 changes continuously, when the diamond wire 30, the first winding drum 10 and/or the second winding drum 20 is driven. This is due to the fact that the diamond wire 30 is wound from the first winding portion 11 to the second winding portion 21 or vice versa such that the length of the first end portion and of the second end portion continuously changes and thus the (floating) number of windings (also smaller than 1) changes continuously.

Preferably, one, more or all of the following parameters is/are the same for the first winding drum 10 and the second winding drum 20: the diameter (distance from two opposed points of the winding side or winding portion 11, 21 going (perpendicular) through the rotation axis 11, 12), the width of the drum 10, 20 and/or of the winding portion 11, 12 (in the direction from one lateral side to the other lateral side), the pitch of the thread and/or of the helical guide recess. Preferably, the first winding drum 10 and the second winding drum 20 are arranged such that the diamond wire 30 can be wound from one to the other of the winding drums 10, 20. Preferably, the first rotation axis 12 and the second rotation axis 22 are parallel to each other. Preferably, the (longitudinal axis of the) diamond wire 30 extending between the first winding drum 10 and the second winding drum 20 is perpendicular to the first rotation axis 12 and/or to the second rotation axis 22.

The diamond wire 30 is fixed with a first end to the first winding drum 10. The first winding drum 10 comprises preferably a first wire fixation means 13. This could be a clamping mechanism, e.g. a screw. Thus, the first end fixed at the first wire fixation means 13 does not move with respect to the first winding drum 10 (in contrast to a loop of the diamond wire around an idler pulley of the state of the art). The first end of the diamond wire 30 is preferably defined as the functional end of the wire and/or the point of fixation of the diamond wire 30 on the first winding drum 10 (even if the diamond wire continues behind this point). The first wire fixation means 13 is preferably arranged at one of the two lateral sides of the first winding drum 10 and/or on the winding side close to the border with the lateral side such that the diamond wire 30 can be wound starting with the first end on the first winding portion 11 from the lateral side with the fixation means fixing the first end of the diamond wire 30. The first end portion of the diamond wire 30 is wound on or around the (first winding portion 11 of the) first winding drum 10. The first end portion is wound at least once, preferably at least twice completely around the (first winding portion 11 of the) first winding drum 10 (maybe except for the state, when the diamond wire 30 is almost or completely unwound from the first winding drum 10). The first end portion is referred to as the portion of the diamond wire 30 following the first end (versus the second end). The first end portion is preferably defined as the portion of the diamond wire 30 between the first end and the point where the diamond wire 30 leaves or enters the first winding drum 10 and/or as the as the portion of the diamond wire 30 wound on the first winding drum 10.

The diamond wire 30 is fixed with a second end to the second winding drum 20. The second winding drum 20 comprises preferably a second wire fixation means 23. This could be a clamping mechanism, e.g. a screw. Thus, the second end fixed at the second wire fixation means 23 does not move with respect to the first winding drum 10 (in contrast to a loop of the diamond wire around an idler pulley of the state of the art). The second end of the diamond wire 30 is preferably defined as the functional end of the wire and/or the point of fixation of the diamond wire 30 on the second winding drum 20 (even if the diamond wire continues behind this point). The second wire fixation means 23 can be arranged at one of the two lateral sides of the second winding drum 20 and/or on the winding side close to the border with the lateral side such that the diamond wire 30 can be wound starting with the second end on the second winding portion 21 from the lateral side with the second fixation means 23 fixing the second end of the diamond wire 30. The second end portion of the diamond wire 30 is wound on or around the (second winding portion 21 of the) second winding drum 20. The second end portion is wound at least once, preferably at least twice completely around the (second winding portion 21 of the) second winding drum 20 (maybe except for the state, when the diamond wire 30 is almost or completely unwound from the second winding drum 20). The second end portion is referred to as the portion of the diamond wire 30 following the second end (versus the first end). The second end portion is preferably defined as the portion of the diamond wire 30 between the second end and the point where the diamond wire 30 leaves or enters the second winding drum 20 and/or as the as the portion of the diamond wire 30 wound on the second winding drum 20.

The diamond wire 30 is wound in a first end portion on or around the (first winding portion 11 of the) first winding drum 10, extends in a cutting portion from the (first winding portion 11 of the) first winding drum 10 to the (second winding portion 21 of the) second winding drum 20 and is wound in a second end portion on or around the (second winding portion 21 of the) second winding drum 20. The cutting portion of the diamond wire 30 extends preferably in a straight line from the first winding drum 10 to the second winding drum 20, i.e. without any deviation. However, it is also possible that an idler pulley (or more of them) is arranged between the first winding drum 10 and the second winding drum 20 such that the diamond wire 30 is led over the idler pulley from the first winding drum 10 to the second winding drum 20. The first end portion and the second end portion are preferably wound such on the first winding drum 10 and on the second winding drum 20 that the curvature/flection type/direction on both drums 10, 20 are the same. This is by the person skilled in the art often also called "+ 0 +" or "- 0 -" compared to different curvatures as "+ 0 -" or - 0 +". The + or - would represent the curvature type or direction of the two winding drums 10, 20 and the 0 the straight cutting portion. This means that the second derivative of the first end portion and the second end portion (in the plane perpendicular to the winding axis or the rotation axis) has the same algebraic sign (+ or -). As a consequence, the two drums 10, 20 are driven at the same time such to rotate in the same rotational direction to wind the wire 30 from one drum to the other. Obviously, it would also be possible (but not be recommended) to have different curvatures and thus different rotation directions of the two drums at the same time.

The drive mechanism is configured to drive the first winding drum 10 and/or the second winding drum 20 such that the diamond wire 30 is wound from the first winding portion 11 to the second winding portion 21 and/or vice versa. The drive mechanism is configured to drive the first winding drum 10 and/or the second winding drum 20 such that the diamond wire 30 moves in the cutting portion (only) along its longitudinal axis from the first winding drum 10 to the second winding drum 20 and/or vice versa. The drive mechanism is configured to drive the first winding drum 10 and/or the second winding drum 20 such that the diamond wire 30 does not move in the cutting portion perpendicular to the longitudinal axis of the diamond wire 30.

Preferably, the drive mechanism drives the first winding drum 10 such that the first winding drum 10 moves in the direction of the first rotation axis 12 during the rotation of the first winding drum 10 around the first rotation axis 12. The translational movement along the first rotation axis 12 and the rotation around the first rotation axis 12 is coordinated such that the global position, where the wire 30 is winded on or is winded from the first winding portion 11, keeps constant and/or such that the position of wire 30 perpendicular to the longitudinal axis of the diamond wire 30 between the first winding drum 10 and the second winding drum 20 keeps constant. This is achieved preferably by moving within one full rotation (360°) of the first winding drum 10 around the first rotation axis the first drum 10 in the direction of the first rotation axis 12 by the distance between two neighbouring diamond wire 30 windings and/or by the thread pitch of the first winding drum 10. Therefore, the first winding drum 10 is preferably driven such that the diamond wire 30 moves exclusively along its longitudinal axis. This allows a very high positioning precision which is very important for high precision cuts.

Preferably, the drive mechanism drives the second winding drum 20 such that the second winding drum 20 moves in the direction of the second rotation axis 22 during the rotation of the second winding drum 20 around the second rotation axis 22. The translational movement along the second rotation axis 22 and the rotation around the second rotation axis 22 is coordinated such that the global position, where the wire 30 is winded on or is winded from the second winding portion 21, keeps constant and/or such that the position of diamond wire 30 perpendicular to the longitudinal axis of the diamond wire 30 between the first winding drum 10 and the second winding drum 20 keeps constant. This is achieved preferably by moving within one full rotation (360°) of the second winding drum 20 around the second rotation axis 22 the second winding drum 20 in the direction of the second rotation axis 22 by the distance between two neighbouring diamond wire 30 windings and/or by the thread pitch of the second winding drum 20. Therefore, the second winding drum 10 is preferably driven such that the diamond wire 30 moves exclusively along its longitudinal axis. This allows a very high positioning precision which is very important for high precision cuts. In addition, it reduces the wear of the expansive and sensitive diamond wires 30.

Preferably, the drive mechanism comprises a first motor driving the first winding drum 10 and a second motor driving the second winding drum 20.

When the diamond wire 30 is wound from the first winding drum 10 to the second winding drum 20, the second motor drives the second winding drum 20 in the rotation direction for winding up the diamond wire 30. Preferably, the first motor is driven in addition in the rotation direction for unwinding the diamond wire 30 from the first winding drum 10. Preferably, the first motor and/or the second motor is/are driven such that the diamond wire 30 in the cutting portion is always under tension. This could be achieved by driving the first motor slightly more slowly than the second motor. This could also be achieved by a sensor sensing the tension and motor regulation based on the sensor measurement which regulates the first and/or the second motor such that the desired tension is maintained. The sensor could be for example integrated in the motor control. Such an integrated sensor could measure the resistance of the motor for driving the motor. For example, the first motor could be driven such that the resistance at the second motor keeps at a desired value. Obviously, it is also possible to realize the drive mechanism by only one motor and to achieve the drive of the first and second winding drum 10, 20 by different transmission means and/or by maybe a separated breaking means.

When the diamond wire 30 is wound from the second winding drum 20 to the first winding drum 10, the first motor drives the first winding drum 10 in the rotation direction for winding up the diamond wire 30. Preferably, the second motor is driven in addition in the rotation direction for unwinding the diamond wire 30 from the second winding drum 20. Preferably, the first motor and/or the second motor is/are driven such that the diamond wire 30 in the cutting portion is always under tension. This could be achieved by driving the second motor slightly more slowly than the first motor. This could also be achieved by a sensor sensing the tension and motor regulation based on the sensor measurement which regulates the first and/or the second motor such that the desired tension is maintained. The sensor could be for example integrated in the motor control. Such an integrated sensor could measure the resistance of the motor for driving the motor. For example, the second motor could be driven such that the resistance measured at the first motor keeps at a desired value.

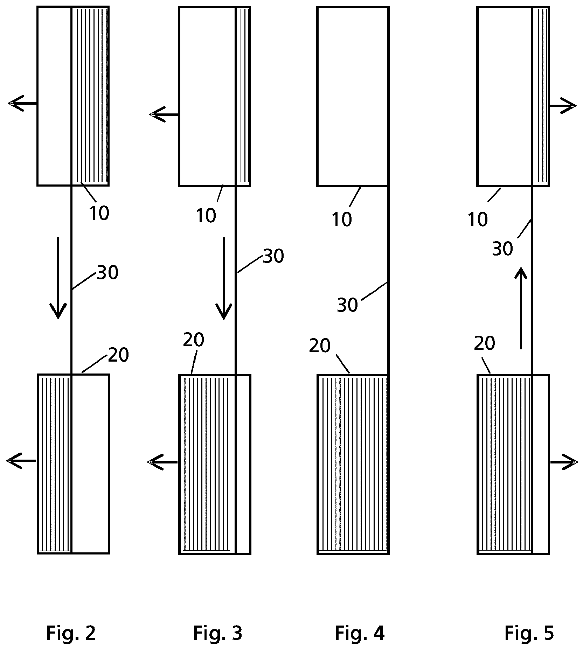

The drive mechanism is now configured to wind (coil) the diamond wire 30 from the first winding drum 10 to the second winding drum 20 (as shown for a first embodiment in Fig. 2 to 3) until a first turning point in which the diamond wire 30 is stopped (as shown for the first embodiment in Fig. 4) and then to wind (coil) the diamond wire 30 from the second winding drum 20 to the first winding drum 10 (as shown for the first embodiment in Fig. 5) until a second turning point in which the diamond wire 30 is stopped. Then the process starts again by winding the diamond wire 30 from the first winding drum 10 to the second winding drum 20 and so on. Therefore, except for the two turning points, the diamond wire 30 is always running in the cutting portion and/or between the first winding drum 10 and the second winding drum 20 so that an object 40 can be cut by the diamond wire 30 moving along its longitudinal axis. The drive mechanism is preferably configured to drive the diamond wire 30 such that the diamond wire 30 (in the cutting portion) moves slower than 10 meter (m) per second (s) (m/s), preferably than 5 m/s, preferably than 3 m/s. Such slow drive velocities avoid a cooling of the diamond wire 30. The drive mechanism is preferably configured to drive the diamond wire 30 such that the diamond wire 30 (in the cutting portion) moves faster than 0,001 m/s, preferably than 0,01 m/s, preferably than 0,05 m/s, preferably than 1 m/s. The turning points refer to points in time or points along the diamond wire 30, when or where the winding directions turn around. In the first embodiment shown in Fig. 2 to 5, the diamond wire 30 is wound or coiled in the same winding direction or winding sense on the first winding drum 10 and on the second winding drum 20. Consequently, the first winding drum 10 and the second winding drum 20 move in the same first translational direction during the rotation of the two drums 10, 20, when the diamond wire 30 moves in a first wire direction (e.g. from the first winding drum 10 to the second winding drum 20). When the diamond wire 30 is fully or nearly wound from the first winding drum 10 on the second winding drum 20, the movement direction of the diamond wire 30 is inverted to the second wire direction such that the diamond wire moves from the second winding drum 20 to the first winding drum 10 as shown in Fig. 5. When the movement of the diamond wire 30 changes its direction, the rotational direction of the first and second winding drum 10, 20 and the translational movement of the first and second winding drum 10, 20 is inverted. Preferably, the turning point, i.e. when the diamond wire 30 changes its wire direction, is before the diamond wire 30 is fully unwound from the unwinding drum 10, 20. This avoids an eventual jumping from the guide recess and/or to high forces on the fixation means 13, 23.

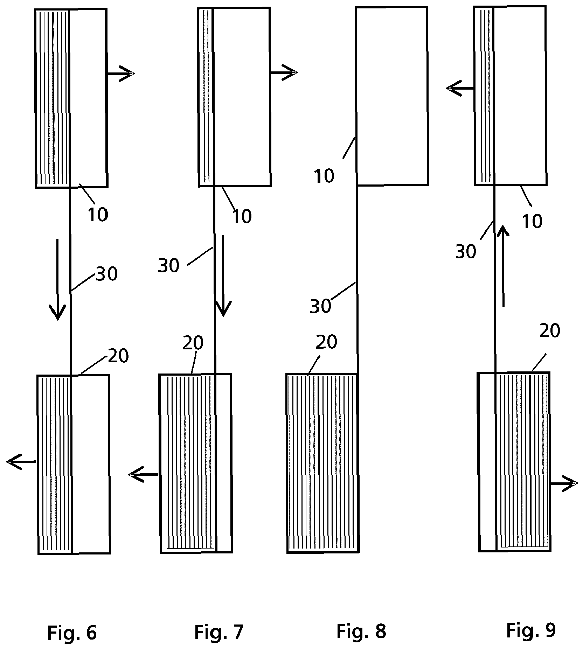

Fig. 6 to 9 show a second embodiment of the invention. This embodiment distinguishes from the first embodiment, by winding the diamond wire 30 in different winding directions on the first winding drum 10 and on the second winding drum 20. For example, the diamond wire 30 is wound clockwise on the first winding drum 10 and anti-clockwise on the second winding drum 20 (looking from the same side obviously) or vice versa. Consequently, translational movement of the first winding drum 10 and the second winding drum 20 is anti-parallel to each other, i.e. in the same direction, but in opposite directions.

The winding directions, the movement direction of the winding drums 10, 20 and the rotation directions of the winding drums 10, 20 shown in Fig. 2 to 9 are only examples and shall not limit the scope of protection of the invention. Further embodiments are possible.

In the preferred embodiment, the turning points are chosen such that in each turning point, the diamond wire 30 is wound (almost) completely on one of the two winding drums 10, 20, while the other one is (almost) completely empty. Thus, one complete cycle has a large amplitude, but a low frequency. However, it is also possible to drive the two winding drums 10, 20 with a high frequency and a low amplitude. This means that the turning points are chosen very close together, i.e. with a wire distance of the Amplitude A. This allows to use very short diamond wires 30. Alternatively, it allows to use for a while a small portion of the diamond wire 30 (by winding the diamond wire 30 in both directions) until this portion is used. Then the diamond wire 30 could be wind about the distance A in one direction and the next small portion on the diamond wire 30 can be used for cutting object. As can be seen, there are many ways to realise this drive mechanism.

In the described embodiment, a diamond wire 30 is used. However, the invention could be also used for other wire saws by replacing the diamond wire 30 by any other type of wire. The wire is configured to cut a material. The diamond wire has a first end and a second end. The wire has a longitudinal axis. The longitudinal axis of the wire is the axis extending in the direction of the wire and/or extending along the wire (thus not necessarily in a direct line) from the first end to the second end of the wire. The wire has preferably a circular cross-section. However, other cross-sectional forms of the wire are possible. The diameter of the wire is preferably larger than 0.01 mm, preferably larger than 0.005 mm. The diameter of the wire is preferably smaller than 5 mm, preferably smaller than 3 mm, preferably smaller than 2 mm. However, other wire diameters are also possible. The wire is made preferably out of a base material with hard particles. The base material is made preferably out of metal, preferably a steel, preferably a stainless steel. However, the base material can be made out of different materials, e.g. by a resistant plastic. The particles are preferably incorporated in the wire or fixed on the surface of the wire. As mentioned above, the particles are preferably made out of diamond material (diamond grains). However, other particle materials are possible, e.g. Carbonitride. The particles can have different particle sizes. The particle size is preferably smaller than 200 micrometer, preferably smaller than 150 micrometer, preferably smaller than 100 micrometer, preferably smaller than 80 micrometer. The particle size is preferably larger than 0,1 micrometer, preferably larger than 0,5 micrometer, preferably larger than 1 micrometer, preferably larger than 5 micrometer. It is further possible to make the wire from a cutting material (i.e. without particles). The wire can for example also made out of fibre composite or a fibre plastic. The length of the wire can vary arbitrarily. For example, the wire can be smaller than 1 m or can be larger than 5 meters, preferably than 10 meters. For example, the wire can be smaller than 100 meters, preferably than 80 meters, preferably than 60 meters, preferably than 50 meters.

## Claims

1. Wire saw comprising:
a wire (30) comprising a first end, a first end portion, a cutting portion, a second end portion and a second end;
a first winding drum (10) with a first winding portion (11), wherein the first end portion is wound up on the first winding portion (11), wherein the first drum (10) is rotatable around a first rotation axis (12);
a second winding drum (20) with a second winding portion (21), wherein the second end portion is wound up on the second winding portion (21), wherein the second winding drum (20) is rotatable around a second rotation axis (22); and
a drive mechanism winding the wire (30) from the first winding portion (11) to the second winding portion (21) and vice versa providing a cutting portion of the wire (30) running along the longitudinal axis of the wire (30) between the first winding drum (10) and the second winding drum (20).

2. Wire saw according to one of the previous claims, wherein the drive mechanism is configured to drive the one of first and second winding drum (10, 20) on which the wire (30) is currently wound up and/or the one of first and second winding drum (10, 20) from which the wire (30) is currently unwound.

3. Wire saw according to one of the previous claims, wherein the drive mechanism is configured to drive the first winding drum (10) and/or the second winding drum (20) such that the wire (30) is kept under tension between the first winding drum (10) and the second winding drum (20).

4. Wire saw according to one of the previous claims,
wherein the drive mechanism is configured to move the first winding drum (10) in the direction of the first rotation axis (12), when rotating the first winding drum (10) such that the global position, where the wire (30) is winded on or is unwinded from the first winding portion, keeps constant and/or such that the position of wire (30) perpendicular to the longitudinal axis of the wire (30) in the cutting portion keeps constant; and/or
wherein the drive mechanism is configured to move the second winding drum (20) in the direction of the second rotation axis (22) when rotating the first winding drum (10) such that the global position, where the wire (30) is winded on or is winded from the second winding portion (21), keeps constant and/or such that the position of wire (30) perpendicular to the wire extension between the first winding drum (10) and the second winding drum (20) keeps constant.

5. Wire saw according to one of the previous claims, wherein the wire (30) is wound with the same curvature sense on the first winding drum (10) and the second winding drum (20) such that the wire (30) is bend in the same direction on the first winding drum (10) and the second winding drum (20).

6. Wire saw according to one of the previous claims, wherein the drive mechanism is configured
to wind the wire (30) from the first winding portion (11) to the second winding portion (21) such that the wire (30) moves from the first winding drum (10) to the second winding drum (20) along the longitudinal axis of the wire (30) and/or
to wind the wire (30) from the second winding portion (21) to the first winding portion (11) such that the wire (30) moves from the second winding drum (20) to the first winding drum (10) along the longitudinal axis of the wire (30).

7. Wire saw according to one of the previous claims, wherein the drive mechanism is configured to wind the wire (30) from the first winding portion (11) to the second winding portion (21) or vice versa such that the longitudinal axis of the wire (30) keeps fixed.

8. Wire saw according to one of the previous claims, wherein the first rotation axis (12) is arranged parallel to the second rotation axis (22).

9. Wire saw according to one of the previous claims, wherein the first winding portion (11) and/or the second winding portion (21) comprises a guide recess extending helically around the winding drum (10, 20) such that the wire (30) wound on the winding drum (10, 20) is supported in the guide recess.

10. Wire saw according to claim 4 and 9,
wherein the guide recess of the first winding portion (11) has a first pitch, wherein the first winding drum (10) moves during one full rotation around the first rotation axis (12) about the first pitch in the direction of the first rotation axis (12); and/or
wherein the guide recess of the second winding portion (21) has a second pitch, wherein the second winding drum (20) moves during one full rotation around the second rotation axis (22) about the second pitch in the direction of the second rotation axis (12).

11. Wire saw according to the previous claim, wherein the first pitch and the second pitch is the same with equal or opposite winding direction of the guide recess.

12. Wire saw according to one of the previous claims, wherein the first end of the wire (30) is fixed to a first wire fixation means (13) of the first drum (10) and/or wherein the second end of the wire (30) is fixed to a second wire fixation means (23) of the second drum (20).

13. Wire saw according to the previous claim, wherein the first wire fixation means (13) is preferably arranged at one of two lateral sides of the first winding drum (10) and/or on a winding side of the first winding drum (10) close to the border with one of the lateral sides and/or, wherein the second wire fixation means (23) is preferably arranged at one of two lateral sides of the second winding drum (20) and/or on a winding side of the second winding drum (20) close to the border with one of the lateral sides.

14. Wire saw according to one of the previous claims, wherein the wire saw is a diamond wire saw, wherein the wire (30) is a diamond wire.

15. Wire saw configured to receive a wire (30) comprising:
a first winding drum (10) with a first winding portion (11) configured to wind up a first end portion of the wire (30) on the first winding portion (11), wherein the first drum (10) is rotatable around a first rotation axis (12);
a second winding drum (20) with a second winding portion (21), wherein a second end portion of the wire (30) is wound up on the second winding portion (21), wherein the second winding drum (20) is rotatable around a second rotation axis (22); and
a drive mechanism configured to wind the wire (30) from the first winding portion (11) to the second winding portion (21) and vice versa providing a cutting portion of the wire (30) running along the longitudinal axis of the wire (30) between the first winding drum (10) and the second winding drum (20).
